# EUROPÄISCHE PATENTSCHRIFT

(11) **EP 3 237 172 B1**
(45) Veröffentlichungstag und Bekanntmachung des Hinweises auf die Patenterteilung: **02.05.2018**
(21) Anmeldenummer: 16805280.1
(22) Anmeldetag: 24.11.2016
(51) Int. Cl.: B29C 47/08, B29C 47/00, B29B 9/06

(54) **SCHMELZEFÜHRENDER VERBINDUNGSADAPTER SOWIE DARAUF BEZOGENE SCHMELZEVERARBEITUNGSANLAGE**
MELT-GUIDING CONNECTION ADAPTER AND RELATED MELT-PROCESSING INSTALLATION
ADAPTATEUR DE RACCORDEMENT ACHEMINANT DE LA MATIÈRE FONDUE ET INSTALLATION DE TRANSFORMATION DE MATIÈRE FONDUE ASSOCIÉE

(30) Priorität: 04.03.2016 DE 202016001455 U
(43) Veröffentlichungstag der Anmeldung: 01.11.2017
(73) Patentinhaber: Gala Industries, Inc., Virginia 24085 (US)
(72) Erfinder: VELTEL, Jürgen, 47626 Kevelaer (DE); BERRENDORF, Matthias, 46509 Xanten (DE)
(74) Vertreter: Thoma, Michael
(86) Internationale Anmeldenummer: PCT/EP2016/001979
(87) Internationale Veröffentlichungsnummer: WO 2017/148493

(56) Entgegenhaltungen:
- EP-A1- 1 174 244
- EP-A2- 0 894 594
- DE-A1- 19 509 375
- DE-U1-202005 001 809
- DE-U1-202013 103 050
- GB-A- 2 017 571
- US-A1- 2006 105 072
- US-A1- 2007 264 379

## Beschreibung

Die vorliegende Erfindung betrifft einen Verbindungsadapter zum Verbinden zweier schmelzeführender Bauteile, mit zwei Adapterhälften, die jeweils Verbindungsmittel zum Verbinden mit je einem der Bauteile aufweisen, sowie Verbindungsmitteln zum Verbinden der beiden Adapterhälften miteinander, und einem Schmelzeführungsstück, das mit einem ersten Mündungsquerschnitt an ein erstes der schmelzeführenden Bauteile und mit einem zweiten Mündungsquerschnitt an das zweite der schmelzeführenden Bauteile angepasst ist. Die Erfindung betrifft ferner eine Schmelzeverarbeitungsanlage mit zwei schmelzeführenden Bauteilen wie beispielsweise einem Extruder und einem Granulierer, die durch einen solchen Verbindungsadapter miteinander verbunden sind.

In Schmelzeverarbeitungsanlagen müssen regelmäßig verschiedene Komponenten bzw. Bauteile der Anlage miteinander schmelzeführend verbunden werden, die in der Querschnittkontur und/oder in der Querschnittbemaßung voneinander abweichende Schmelzeanschlüsse besitzen. Beispielsweise können dies der Extruder und der Unterwassergranulierer einer Kunststoffgranulieranlage sein. Bisweilen werden auch Pumpen zum Fördern der Schmelze an einen Schmelzeerzeuger angeschlossen, oder Anfahrventile in die Zuleitung zum Granulierer montiert, um noch nicht granulierfähige Schmelze abzuleiten, oder Siebwechsler angeschlossen. Je nach Ausbildung der schmelzeverarbeitenden Anlage können auch andere schmelzeführende Bauteile Verwendung finden, die miteinander zu verbinden sind.

Um solche schmelzeführenden Bauteile miteinander schmelzeführend verbinden zu können, werden üblicherweise schmelzeführende Verbindungsadapter eingesetzt, deren Schmelze führende Innenkontur den Übergang zwischen den im Querschnitt oft abweichenden Schmelzeanschlüssen der beiden Bauteile herstellt. Zum einen können die Schmelzeanschlüsse der beiden Bauteile voneinander abweichende Durchmesser besitzen, so dass sich der Schmelzeführungskanal des Verbindungsadapters verjüngen oder erweitern muss, um Strömungswiderstände zu verringern und Strömungstotstellen, an denen sich Schmelze fangen und erkalten kann, zu vermeiden. Zum anderen sind bisweilen auch verschiedene Querschnittskonturen ineinander überzuleiten, beispielsweise eine kreisrunde Querschnittskontur an dem einen Bauteil in eine ovale, elliptische oder auch sechs- oder achteckige Querschnittskontur am anderen Bauteil.

Solche Verbindungsadapter können einteilig oder mehrteilig ausgebildet sein. Einteilige Adapter sind in der Regel einfach zu fertigen, besitzen jedoch Nachteile hinsichtlich Handhabung, Einsatzflexibilität und Reparaturfreundlichkeit. Bei einer Beschädigung des Schmelzekanals durch z.B. Korrosion, deren Bildung durch verschiedene Kunststoffschmelzen gefördert wird, muss der ganze Adapter ersetzt werden. Zum anderen ist ein schnelles Trennen der beiden schmelzeführenden Bauteile nicht einfach möglich, da hierzu die Passverbindungen und Bolzenverschlüsse zwischen dem Verbindungsadapter und zumindest einem der Bauteile zu lösen sind. Ferner sind einteilige Verbindungsadapter regelmäßig Sonderanfertigungen bzw. Lösungen für eine bestimmte Einbausituation, die nicht mehr passt, wenn beispielsweise der Abstand der schmelzeführenden Bauteile voneinander zu verändern ist oder eines der beiden zu verbindenden Bauteile durch ein anderes Bauteil ersetzt werden muss. Hinzu kommt, dass je nach Baulänge des Verbindungsadapters und der zu fördernden Schmelze eine Beheizung vorzusehen ist. Stellt sich während der Produktion heraus, dass der Schmelzekanal des Verbindungsadapters für die Schmelze nicht geeignet ist, muss ein neuer Adapter beschafft werden.

Es wurde daher bereits angedacht, mehrteilige Adapter zu verwenden, die aus zwei Adapterhälften bestehen können, die einerseits jeweils mit einem der Bauteile verbunden werden und andererseits miteinander verbunden werden können. Der signifikante Vorteil eines solchen mehrteiligen Verbindungsadapters ist es, dass mit wenigen Arbeitsschritten die Adapterhälften voneinander getrennt und damit die beiden durch den Verbindungsadapter verbundenen schmelzeführenden Bauteile voneinander entkoppelt werden können. Allerdings ist es auch bei solchen mehrteiligen Adaptern bislang so, dass bei einer Beschädigung im Schmelzekanal zumindest eine Adapterhälfte, wenn nicht sogar beide Adapterhälften ausgetauscht werden müssen. Ferner ist die Einsatzflexibilität begrenzt. Wird eines der schmelzeführenden Bauteile ersetzt, muss meist auch die zugehörige Adapterhälfte ausgetauscht werden, da deren Schmelzeführungskanal hinsichtlich seiner Querschnittskontur und -bemaßung nicht mehr mit dem neuen schmelzeführenden Bauteil zusammenpasst.

Die EP 1 174 244 A1 zeigt einen Verbindungsadapter mit zwei Adapterhälften, die gemeinsam den Schmelzeführungskanal, der die beiden schmelzeführenden Bauteile verbinden soll, bilden und zwischen sich eine als Strainer dienende Lochplatte aufnehmen. Ferner zeigt die Schrift US 2006/0105072 A1 einen Verbindungsadapter mit zwei Adapterhälften, die gemeinsam einen Schmelzeführungskanal definieren, der sich in Strömungsrichtung betrachtet zunächst aufweitet und dann wieder verjüngt, um eine Dekompressionskammer zu bilden, in der sich die Schmelze entspannen kann, wodurch Fehlstellen im anschließend aus der Schmelze geformten Produkt reduziert werden sollen.

Der vorliegenden Erfindung liegt die Aufgabe zugrunde, einen verbesserten schmelzeführenden Verbindungsadapter zu schaffen, der Nachteile des Standes der Technik vermeidet und Letzteren in vorteilhafter Weise weiterbildet. Insbesondere soll ein einfach zu montierender und zu fertigender Verbindungsadapter geschaffen werden, der eine prozessoptimierte Verbindung zweier schmelzeführender Bauteile ermöglicht, wartungs- und reparaturfreundlich ist und eine hohe Einsatzflexibilität besitzt.

Erfindungsgemäß wird die genannte Aufgabe durch einen Verbindungsadapter gemäß Anspruch 1 sowie eine Schmelzeverarbeitungsanlage mit einem solchen Verbindungsadapter gemäß Anspruch 18 gelöst. Bevorzugte Ausgestaltungen der Erfindung sind Gegenstand der abhängigen Ansprüche.

Es wird also vorgeschlagen, die strömungsführende Funktion von der mechanischen Verbindungsfunktion zu trennen und durch separate Bauelemente zu realisieren. Erfindungsgemäß ist das Schmelzeführungsstück separat von den Adapterhälften ausgebildet und durch die miteinander verbundenen Adapterhälften gegen die schmelzeführenden Bauteile spannbar. Die Adapterhälften dienen somit der mechanischen Verbindung der beiden Bauteile miteinander sowie der Positionierung und Befestigung des Schmelzeführungsstücks an den beiden Bauteilen, die Schmelzeströmungsverbindung zwischen den beiden Bauteilen wird jedoch durch das separate Schmelzeführungsstück bewerkstelligt. Das genannte Schmelzeführungsstück kann dabei von den Adapterhälften insbesondere axial zwischen den beiden schmelzeführenden Bauteilen eingespannt werden, d.h. die Adapterhälften spannen die beiden Bauteile axial gegen die Stirnseiten des Schmelzeführungsstücks. Hierdurch kann nicht nur eine stabile mechanische Verbindung der beiden Bauteile miteinander erzielt werden, sondern auch ein dichter Übergang der Schmelzeanschlüsse der beiden Bauteile zu dem Schmelzeführungsstück. Bei Beschädigungen beispielsweise durch Korrosion kann das von den Adapterhälften lösbare Schmelzeführungsstück ausgetauscht werden, während die Adapterhälften wiederverwendet werden können. Dies gilt auch, wenn eines der schmelzeführenden Bauteile ausgetauscht wird und ein anderer Querschnittsübergang benötigt wird. Ferner kann durch die Trennung des Schmelzeführungsstücks von den Adapterhälften jede Komponente funktional bestmöglich an seine Bedürfnisse angepasst werden, insbesondere was Werkstoffwahl und Dimensionierung sowie Geometrie angeht. Insbesondere kann auch eine bessere thermische Entkoppelung des Schmelzefühungskanals bzw. - stücks von den Adapterhälften erzielt werden, sodass eine raschere Aufwärmung des Schmelzeführungskanals und weniger Wärmeverluste über die Adapterhälften erzielt werden können.

In vorteilhafter Weiterbildung der Erfindung können die Adapterhälften gemeinsam eine Hülse bilden, die das Schmelzeführungsstück umschließt. Durch eine hülsenförmige Ummantelung des Schmelzeführungsstücks durch die Adapterhälften ist nicht nur das Schmelzeführungsstück gegen mechanische und thermische Einflüsse von der Umgebung her geschützt, sondern vor allen Dingen kann eine über den Umfang des Schmelzeführungsstücks gleichmäßige Verspannung der Bauteile gegen das Schmelzeführungsstück erzielt werden.

Um eine exakte Positionierung des Schmelzeführungsstücks relativ zu den Schmelzeanschlüssen der beiden zu verbindenden Bauteile zu erreichen, kann zumindest eine Zentrierfläche zum Zentrieren des Schmelzeführungsstücks relativ zu den zu verbindenden Bauteilen und/oder zu den Adapterhälften vorgesehen sein. Eine solche Zentrierfläche kann ein Umfangs-Passflächenpaar umfassen, das eine Umfangspassfläche an einer Adapterhälfte oder einem der Bauteile vorsieht, mit der eine Umfangsfläche des Schmelzeführungsstücks zentrierend in Eingriff bringbar ist. Die genannte Zentrierfläche, an der das Schmelzeführungsstück zentriert wird, kann dabei an einer der Adapterhälften oder an dem Bauteil selbst, an dem das Schmelzeführungsstück angeschlossen wird, vorgesehen sein.

Vorteilhafterweise kann dabei für jeden Endabschnitt des Schmelzeführungsstücks eine solche Zentrierfläche vorgesehen sein, um beide Mündungsabschnitte des Schmelzeführungsstücks passgenau bzw. zentriert an das jeweilige schmelzeführende Bauteil bzw. dessen Schmelzeanschluss anzuschließen. Die Zentrierflächen können dabei beide an den Adapterhälften vorgesehen sein, oder beide direkt an den zu verbindenden Bauteilen selbst ausgebildet sein, oder es kann eine Mischung hieraus vorgesehen sein, d.h. eine Zentrierfläche kann unmittelbar selbst am zu verbindenden schmelzeführenden Bauteil vorgesehen sein, während die Zentrierfläche für den gegenüberliegenden Endabschnitt des Schmelzeführungsstücks an der dortigen Adapterhälfte vorgesehen sein kann.

In vorteilhafter Weiterbildung der Erfindung kann zwischen den Adapterhälften bzw. der hiervon gemeinsam gebildeten Hülse einerseits und dem Schmelzeführungsstück andererseits ein Luftspalt und/oder eine thermische Isolierung vorgesehen sein, um einen Wärmeübergang zwischen dem Schmelzeführungsstück und den Adapterhälften zu reduzieren und insbesondere zu verhindern, dass über die Adapterhälften zuviel Wärme aus dem Schmelzeführungskanal herausgezogen wird. Durch eine solche thermische Isolierung bzw. einen Luftspalt kann der Schmelzekanal bzw. das Schmelzeführungsstück deutlich schneller aufgeheizt werden, wodurch sich Anfahrvorgänge verkürzen und ggfs. auf eine Heizung verzichtet werden oder eine Heizung mit kleinerer Leistung ausreichend sein kann. Das Vorsehen einer Heizung ist optional und hängt im Wesentlichen von der benötigten Länge des Schmelzeführungsstücks und den anwendungstechnischen Randbedingungen ab. Alternativ oder zusätzlich zu dem genannten Luftspalt bzw. einer thermischen Isolierung zwischen dem Schmelzeführungsstück und den Adapterhälften kann ggfs. auch das Schmelzeführungsstück selbst thermisch isoliert ausgebildet sein, beispielsweise durch einen mehrschichtigen Aufbau oder eine Ummantelung oder einer thermisch isolierenden Beschichtung.

Ist das Schmelzeführungsstück in der oben erläuterten Weise an einer oder beiden der Adapterhälften zentriert, kann der genannte Luftspalt bzw. die thermische Isolierung zumindest in den Bereichen vorgesehen sein, die nicht in Zentriereingriff miteinander stehen, wobei vorzugsweise ein Luftspalt und/oder eine thermische Isolierung im Wesentlichen über die gesamte Länge von Schmelzeführungsstück und Adapterhälften - mit Ausnahme der genannten Zentriereingriffsabschnitte - vorgesehen sein kann. Gegebenenfalls ist auch im Bereich der Zentriereingriffe eine thermische Isolierung möglich, beispielsweise durch eine thermisch isolierende Beschichtung des Schmelzeführungsstücks.

Alternativ oder zusätzlich zu einer thermischen Isolierung der Adapterhälften gegenüber dem Schmelzeführungsstück können die Adapterhälften auch gegeneinander thermisch isoliert sein, wobei beispielsweise zwischen den Adapterhälften ein Luftspalt und/oder eine thermische Isolierung vorgesehen sein kann, um einen Wärmeübergang von einer Adapterhälfte auf die andere Adapterhälfte und damit von einem der Schmelze führenden Bauteile auf das andere der Schmelze führenden Bauteile zu verhindern bzw. zu reduzieren.

Die Verbindungsmittel zum Verbinden der beiden Adapterhälften miteinander können grundsätzlich verschieden ausgebildet sein, wobei die Verbindungsmittel vorteilhafterweise formschlüssig und/oder kraftschlüssig ausgebildet sein können. Vorteilhafterweise kann durch formschlüssige Verbindungsmittel eine exakte Sollpositionierung der beiden Adapterhälften zueinander erzwungen werden. Durch eine kraftschlüssige Ausbildung der Verbindungsmittel kann ein Verspannen der schmelzeführenden Bauteile gegen das Schmelzeführungsstück erzwungen werden.

In vorteilhafter Weiterbildung der Erfindung können die genannten Verbindungsmittel zum Verbinden der Adapterhälften miteinander eine umfangsseitige Keilwulst an den beiden Adapterhälften sowie einen auf die genannte Keilwulst spannbaren Spannring umfassen. Wird der genannte Spannring auf die Keilwulst gespannt, werden die beiden Adapterhälften sowohl axial als auch radial relativ zueinander gehalten.

Die genannte umfangsseitige Keilwulst an den Adapterhälften kann dabei zwei Keilwulsthälften umfassen, von denen eine an der einen Adapterhälfte und die andere an der anderen Adapterhälfte ausgebildet ist, wobei die beiden Keilwulsthälften bei bestimmungsgemäßer Ausrichtung der Adapterhälften zueinander Rücken an Rücken zueinander, mit voneinander abgewandten Keilflächen benachbart zueinander angeordnet sind. Wird der genannte Spannring auf die beiden Keilwulsthälften gespannt, werden die Keilwulsthälften und damit die Adapterhälften zum einen radial zueinander ausgerichtet und zum anderen axial gegeneinander gespannt, d.h. die Keilwulsthälften werden Rücken an Rücken aufeinandergezogen bzw. -gedrückt.

Die umfangsseitige Keilwulst an den Adapterhälften kann dabei einen radial nach außen vorspringenden Flansch bilden, der ringförmig umlaufend oder als Teilring oder in Form von Ringsegmenten ausgebildet sein kann. Die genannte Keilwulst kann sich hierbei in einer Ebene erstrecken, die im Wesentlichen senkrecht zur Längsachse des Verbindungsadapters und/oder zur Längsachse bzw. Strömungsrichtung des Schmelzeführungsstücks ausgerichtet sein kann.

Die zu gegenüberliegenden Seiten hin abfallenden Keilflanken der Keilwulst können dabei - im Querschnitt betrachtet - spitzwinklig geneigte, im Wesentlichen ebene Keilflanken bilden. Alternativ zu ebenen Keilflanken können die genannten Keilflanken jedoch auch leicht gekrümmt sein, beispielsweise - im Querschnitt betrachtet - leicht konkav oder konvex gekrümmt sein. Je nach Konturierung des Spannrings kommt auch eine bloß gestufte oder im Querschnitt rechteckig ausgebildete Konturierung der Keilwulst in Betracht.

Der genannte Spannring, der auf die Keilwulst gespannt werden kann, besitzt innenumfangsseitig vorteilhafterweise eine Keilflächennut, die auf die Keilwulst der Adapterhälften setzbar und durch Zusammenziehen des Spannrings mit der Keilwulst verkeilbar ist bzw. verspannbar ist derart, dass die radial wirkende Spannkraft des Spannrings - zumindest auch - eine Axialkraft auf die Keilwulsthälften erzeugt, die die Keilwulsthälften gegeneinander bzw. aufeinander zu spannt.

Der Spannring kann geteilt oder geschlitzt ausgebildet sein. Unabhängig hiervon kann der Spannring umfangs- und/oder durchmesserveränderbar ausgebildet sein, um auf die Keilwulst der Adapterhälften gespannt werden zu können.

Die vorgenannte, innenumfangsseitige Keilflächennut des Spannrings kann - im Querschnitt betrachtet - verschieden konturiert sein, beispielsweise zwei spitzwinklig zueinander geneigte, ebene Keilflanken aufweisen. Vorteilhafterweise ist die Keilflächennut konturmäßig an die Keilwulst an den Adapterhälften angepasst, insbesondere dazu komplementär ausgebildet.

Vorteilhafterweise kann der Spannring Befestigungsmittel aufweisen, mittels derer der Spannring an einem oder beiden der schmelzeführenden Bauteile befestigt werden kann. Das Befestigungsmittel kann beispielsweise eine Bolzenverbindung umfassen.

Die Verbindungsmittel der Adapterhälften zum Verbinden mit jeweils einem der schmelzeführenden Bauteile können ebenfalls verschieden ausgebildet sein, insbesondere formschlüssig und/oder kraftschlüssig. Vorteilhafterweise können die genannten Verbindungsmittel Schraubbolzenverbindungen umfassen, mittels derer die Adapterhälften stirnseitig gegen jeweils eines der schmelzeführenden Bauteile geschraubt werden können. Die Verbindungsmittel können dabei auch Zentrier- und/oder Passmittel umfassen, mittels derer die Verbindungshälften an dem jeweiligen schmelzeführenden Bauteil zentriert und/oder passgenau ausgerichtet werden können. Dies können beispielsweise Passstifte sein, die zwischen jeweils einer Adapterhälfte und dem zugehörigen Bauteil vorgesehen sein können. Alternativ oder zusätzlich können dies auch Passungskonturen wie Zentriervorsprünge und -ausnehmungen sein.

Durch die getrennte Ausführung des Schmelzeführungsstücks von den Adapterhälften können diese Bauteile hinsichtlich ihrer Materialbeschaffenheit individuell optimiert werden. In Weiterbildung der Erfindung kann dabei vorgesehen sein, dass die Adapterhälften einerseits und das Schmelzeführungsstück andererseits aus verschiedenen Materialien mit unterschiedlichen Materialausdehnungskoeffizienten gefertigt sind, was dazu genutzt werden kann, um die Verspannung bzw. Abdichtung des Schmelzeführungsstücks gegen die zu verbindenden Schmelze führende Bauteile zu verbessern. Beispielsweise kann das Schmelzeführungsstück aus einem oder mehreren Materialien mit einem insgesamt größeren Wärmeausdehnungskoeffizienten als die Adapterhälften gefertigt sein, sodass sich das Schmelzeführungsstück beim Erwärmen - beispielsweise durch die hindurchströmende Schmelze - stärker ausdehnt als die Adapterhälften. Die größere Wärmedehnung des Schmelzeführungsstücks führt zu einem zusätzlichen Verklemmen bzw. Verspannen des Schmelzeführungsstücks gegen die Schmelze führenden Bauteile und ggfs. auch gegen die Adapterhälften, soweit dort Zentrierflächen vorgesehen sind.

Alternativ oder zusätzlich kann auch das Schmelzeführungsstück selbst aus verschiedenen Materialien mit unterschiedlichen Wärmeausdehnungskoeffizienten bestehen und/oder verschiedene Abschnitte umfassen, die aus verschiedenen Materialien unterschiedlichen Wärmeausdehnungskoeffizienten aufweisen.

Die separate Ausbildung des Schmelzeführungsstücks erlaubt es auch, dieselben Adapterhälften mit verschiedenen Schmelzeführungsstücken zu kombinieren, beispielsweise Schmelzeführungsstücke unterschiedlicher Durchmesser einzusetzen, je nachdem welchen Durchmesser die Schmelzekanäle der zu verbindenden Bauteile besitzen, wobei die genannten Bauteile nichtsdestotrotz durch dieselben Adapterhälften miteinander verbunden werden können.

Alternativ oder zusätzlich ist es auch möglich, wahlweise Schmelzeführungsstücke mit Schmelzefühlern oder Schmelzeführungsstücke ohne Schmelzefühler zu verwenden, wobei solche Schmelzefühler beispielsweise Temperaturfühler oder Druckfühler oder Massenstromdetektoren sein können. Gegebenenfalls können auch mehrere Schmelzefühler an einem Schmelzeführungsstück vorgesehen sein. Der zumindest eine Schmelzefühler kann hierbei in das Schmelzeführungsstück integriert sein. Alternativ oder zusätzlich kann das Schmelzeführungsstück auch eine Fühlerausnehmung aufweisen, in die ein Fühler bei Bedarf eingesetzt werden kann oder ggfs. auch einfach ein Verschlussstopfen eingesetzt werden kann.

Um die Adapterhälften sowohl für Schmelzeführungsstücke mit Schmelzefühler als auch Schmelzeführungsstücke ohne Schmelzefühler verwenden zu können, kann zumindest eine der Adapterhälften eine Ausnehmung zum Durchführen des Schmelzefühlers und/oder einer damit verbundenen Signalleitung aufweisen. Beispielsweise kann eine Adapterhälfte eine langlochartige oder längsschlitzartige Ausnehmung umfassen, durch die sich ein Teil des Schmelzefühlers und/oder eine damit verbundene Signalleitung hindurch erstrecken kann.

Vorteilhafterweise kann ein solcher Schmelzefühler auch nachgerüstet werden, ohne hierfür beide Adapterhälften austauschen zu müssen bzw. einen gänzlich umkonzeptionierten Verbindungsadapter verwenden zu müssen.

Das Schmelzeführungsstück kann in Weiterbildung der Erfindung insgesamt betrachtet ein Rohrhülsenstück bilden, das einen zentralen Schmelzeführungskanal aufweist. Unabhängig von der Außenkontur bzw. Korpusausbildung des Schmelzeführungsstücks bildet der Schmelzeführungskanal des Schmelzeführungsstücks einen möglichst harmonischen Übergang zwischen den beiden Mündungsquerschnitten des Schmelzeführungsstücks, die vorteilhafterweise an die Mündungsquerschnitte der Schmelzeanschlüsse der beiden zu verbindenden Bauteile form- und/oder maßangepasst sein können. Dementsprechend kann der Schmelzeführungskanal sich verjüngen oder erweitern, beispielsweise sich konisch aufweiten oder sich leicht trichterförmig verjüngen. Je nach Ausbildung der Anschlusskonturen der Schmelzeanschlüsse der Bauteile können dabei konische und/oder zylindrische und/oder andersartige Schmelzekanalübergänge von dem Schmelzeführungskanal realisiert sein. Solche andersartigen Schmelzekanalübergänge können beispielsweise Übergänge von runden Querschnittskonturen auf eckige Querschnittskonturen oder von kreisförmigen Konturen auf ovalen Konturen oder allgemein Übergänge zwischen voneinander in der Form abweichenden Querschnittskonturen sein. Das Schmelzeführungsstück ist ausgebildet, einen Höhen- und/oder Seiten- bzw. Querversatz zwischen den beiden zu verbindenden Bauteilen bzw. den darin vorgesehenen Schmelzekanälen auszugleichen. Erfindungsgemäss besitzt Schmelzeführungsstück zwei zueinander exzentrisch versetzte Mündungsabschnitte. Betrachtet man die beiden Mittelsenkrechten, die senkrecht zur Querschnittsfläche durch das Zentrum der Mündungsquerschnitte gehen, sind diese beiden Mittelgeraden zueinander exzentrisch versetzt.

Dieser exzentrische Querversatz der Mündungsquerschnitte kann auf verschiedene Art und Weise erzielt werden, beispielsweise durch einen abgekröpften oder leicht s-förmig verlaufenden Schmelzeführungsstück-Abschnitt. Alternativ oder zusätzlich kann der gewünschte Querversatz zum Ausgleich von Höhenunterschieden oder Querversatzunterschieden der zu verbindenden Schmelzekanäle auch dadurch ausgeglichen werden, dass die Enden des Schmelzeführungsstücks gegenläufig schräg zur Längsachse des Schmelzeführungsstücks abgelängt sind bzw. das Schmelzeführungsstück Mündungs- bzw. Anschlussquerschnitte besitzt, die sich in Ebenen erstrecken, die zwar zueinander parallel sein können, jedoch zur Längsachse des Schmelzeführungsstücks schräg angestellt sind.

Um einen solchen Querversatz des Schmelzeführungsstücks zuzulassen, können die Adapterhälften beispielsweise ausreichend groß ausgebildet sein, um radial genug Luft für einen solchen Querversatz zu geben. Alternativ oder zusätzlich kann auch zumindest eine der Adapterhälften selbst mit einem entsprechenden exzentrischen Versatz ausgebildet sein.

Die Erfindung wird nachfolgend anhand bevorzugter Ausführungsbeispiele und zugehöriger Zeichnungen näher erläutert. In den Zeichnungen zeigen:

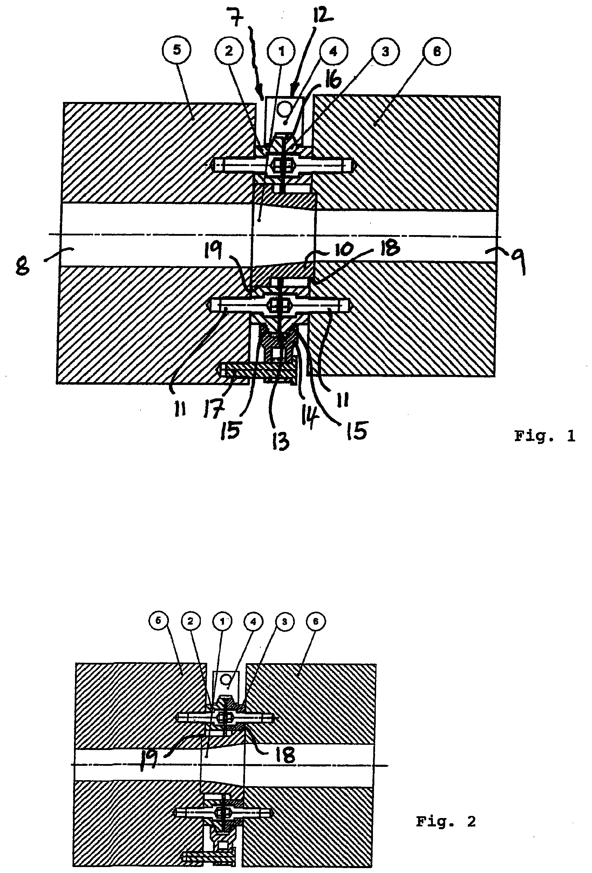

- Fig. 1:: einen Längsschnitt durch zwei schmelzeführende Bauteile und den dazwischen vorgesehenen Verbindungsadapter nach einer vorteilhaften Ausführung der Erfindung, wobei das Schmelzeführungsstück des Verbindungsadapters einerseits an einer Adapterhälfte und andererseits an einem der zu verbindenden Bauteile zentriert ist,
- Fig. 2:: einen Längsschnitt durch zwei schmelzeführende Bauteile und einen dazwischen vorgesehenen Verbindungsadapter ähnlich Fig. 1 nach einer weiteren Ausführung der Erfindung, gemäß der das Schmelzeführungsstück an dem - im Vergleich zur Ausführung nach Fig. 1 - gegenüberliegenden Bauteil zentriert ist,

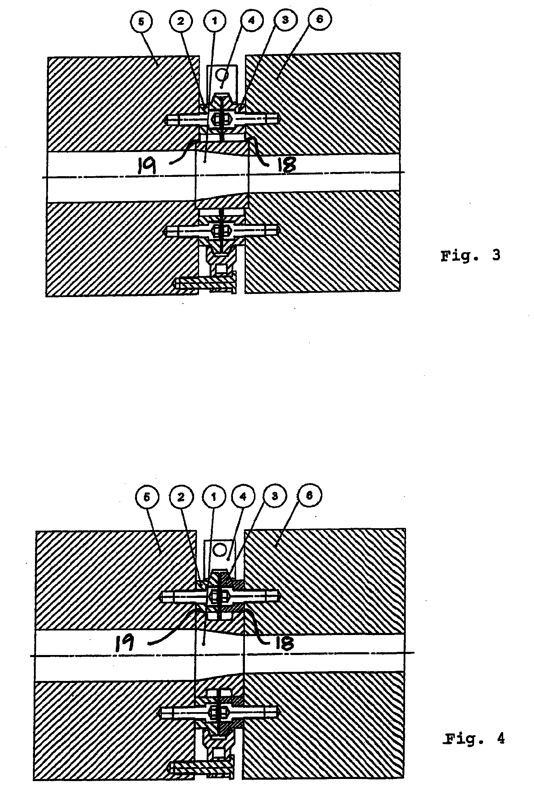

- Fig. 3:: einen Längsschnitt durch zwei schmelzeführende Bauteile und den dazwischen vorgesehenen Verbindungsadapter ähnlich den vorhergehenden Figuren nach einer weiteren Ausführung, gemäß der das Schmelzeführungsstück an beiden gegenüberliegenden Bauteilen zentriert ist, nicht jedoch an den Adapterhälften zentriert ist,
- Fig. 4:: einen Längsschnitt durch zwei schmelzeführende Bauteile und den dazwischen vorgesehenen Verbindungsadapter ähnlich den vorhergehenden Figuren nach einer weiteren Ausführung der Erfindung, gemäß der das Schmelzeführungsstück an beiden Adapterhälften zentriert ist,

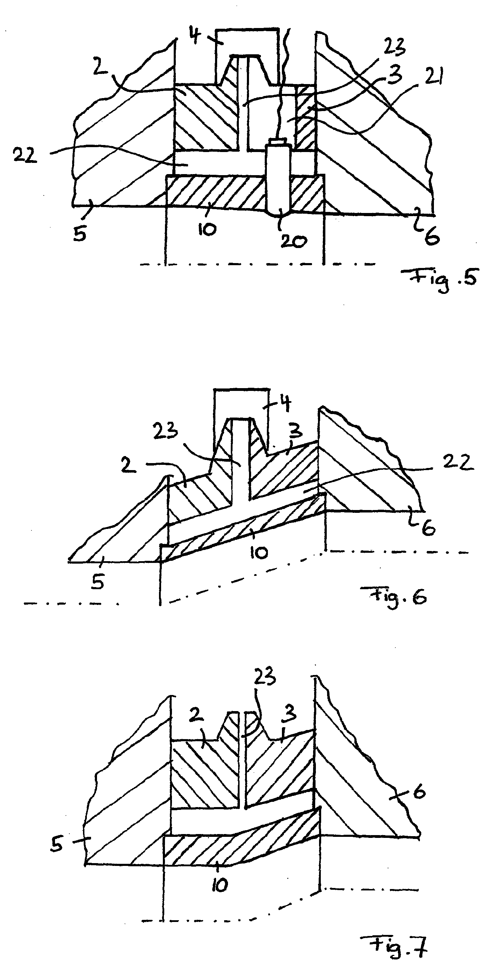

- Fig. 5:: eine Halbschnittansicht eines Verbindungsadapters nach einer weiteren Ausführung der Erfindung, bei der ein Schmelzefühler an dem Schmelzeführungsstück vorgesehen ist und eine der Adapterhälften eine schlitzförmige Durchgangsausnehmung zum Durchführen des Signalkabels aufweist,
- Fig. 6:: einen Halbschnitt eines Verbindungsadapters nach einer weiteren Ausführung der Erfindung, bei dem das Verbindungsstück und die beiden Adapterhälften einen exzentrischen Versatz besitzen, um Bauteile miteinander zu verbinden, deren Schmelzekanäle zueinander höhen- oder querversetzt sind, und
- Fig. 7:: einen Halbschnitt eines Verbindungsadapters nach einer weiteren Ausführung der Erfindung, bei dem das Schmelzeführungsstück ebenfalls einen exzentrischen Versatz ähnlich wie die Ausführung nach Fig. 6 besitzt, wobei jedoch nur eine der Adapterhälften einen entsprechenden exzentrischen Versatz aufweist, während die andere Adapterhälfte eine "normale" Adapterhälfte ohne Exzentrizität ist.

Wie Fig. 1 zeigt, können zwei miteinander zu verbindende, schmelzeführende Bauteile 5 und 6 jeweils einen Schmelzekanal 8 und 9 umfassen, die unterschiedliche Querschnittsflächen und/oder unterschiedliche Querschnittskonturen besitzen können, wobei in Fig. 1 das linke Bauteil 5 einen im Querschnitt größeren Schmelzekanal als das in Fig. 1 rechte Bauteil 6 aufweisen kann. Die beiden schmelzeführenden Bauteile 5 und 6 können Teil einer Schmelzeverarbeitungsanlage sein und Funktionskomponenten einer solchen Anlage bilden, beispielsweise einen Extruder, einen Siebwechsler, eine Schmelzepumpe, ein Anfahrventil und/oder einen Granulierkopf eines Granulierers. Die Bauteile 5 und 6 können dabei elektrisch und/oder mit Thermalöl und/oder einer anderen Heizung beheizt sein, wobei eine Steuervorrichtung, insbesondere ein Temperaturregler vorgesehen sein kann, um beispielsweise über Thermofühler eine Temperatursteuerung oder -regelung an den Bauteilen 5 und 6 auszuführen.

Die genannten schmelzeführenden Bauteile 5 und 6 werden vorteilhafterweise mit ihren genannten Schmelzekanälen 8 und 9 miteinander fluchtend ausgerichtet und dabei durch den Verbindungsadapter 7 miteinandner verbunden. Zum Verbinden der beiden Schmelzekanäle 8 und 9 der beiden Bauteile 5 und 6 ist dabei ein Schmelzeführungsstück 10 vorgesehen, das - grob gesprochen - eine Ringhülse bildet und einen Schmelzekanal 1 besitzt, der den Querschnitt des Schmelzekanals 8 des einen Bauteils 5 konturmäßig in den Querschnitt des Schmelzekanals 9 des anderen Bauteils 6 überführt, wobei dies, wie Fig. 1 zeigt, beispielsweise eine konische Kanalverjüngung bzw. ein konischer Querschnittsübergang sein kann.

Die beiden Bauteile 5 und 6 werden hierbei stirnseitig gegen die gegenüberliegenden Stirnseiten des Schmelzeführungsstücks 10 gespannt, um einen dichten Übergang der Schmelzekanäle ineinander zu gewährleisten. Die Stirnflächen des Schmelzeführungsstücks 10 können hierbei eine ebene Konturierung in einer Ebene senkrecht zur Strömungsrichtung bzw. Längsachse des Schmelzeführungsstücks 10 aufweisen. Auch die Bauteile 5 und 6 können an den Umgebungsabschnitten, die die Mündungen der Schmelzekanäle 8 bzw. 9 umgeben, eben konturiert sein, so dass die Bauteile 5 und 6 gegen die Stirnseiten des Schmelzeführungsstücks 10 passgenau gespannt werden können.

Zur mechanischen Verbindung der beiden Bauteile 5 und 6 und dem Festspannen des Schmelzeführungsstücks 10 sind dabei zwei Adapterhälften 2 und 3 vorgesehen, die von dem Schmelzeführungsstück 10 separat ausgebildet sind und gemeinsam eine Hülse bilden, die das Schmelzeführungsstück 10 umgibt.

Die Adapterhälften 2 und 3 können hierbei jeweils einen Adapterring bilden, der um das Schmelzeführungsstück 10 herum an die Stirnseite des jeweiligen Bauteils 5 bzw. 6 befestigt werden kann.

Die Adapterhälften 2 und 3 können hierbei jeweils mittels Verbindungsmitteln 11, beispielsweise in Form von Schraubbolzen, an dem jeweiligen Bauteil 5 bzw. 6 formschlüssig und/oder kraftschlüssig befestigt werden, insbesondere starr befestigt werden.

In bestimmungsgemäßer Ausrichtung der beiden Bauteile 5 und 6 zueinander liegen die beiden Adapterhälften 2 und 3 Rücken an Rücken aneinander und bilden die gemeinsame Hülse, die das Schmelzeführungsstück 10 umgibt.

Um die beiden Adapterhälften 2 und 3 miteinander verbinden zu können, sind Verbindungsmittel 12 vorgesehen, die in vorteilhafter Weiterbildung der Erfindung eine Spannverbindung und/oder eine Klemmverbindung bilden, mittels derer die beiden Adapterhälften 2 und 3 miteinander verspannbar und/oder miteinander verklemmbar sind.

Vorteilhafterweise kann die Spann- und/oder Klemmverbindung eine an den Adapterhälften 2 und 3 umfangsseitig vorgesehene Keilwulst 13 umfassen, auf die ein Spannring 14 spannbar ist.

Die genannte Keilwulst 13 kann hierbei zwei Keilwulsthälften umfassen, von denen jeweils eine an einer der Adapterhälften 2 und 3 vorgesehen ist. In der bestimmungsgemäßen Ausrichtung der beiden Adapterhälften 2 und 3 zueinander kommen die beiden Keilwulsthälften Rücken an Rücken zueinander zu liegen, so dass sich Keilflanken 15 der Keilwulsthälften zu gegenüberliegenden Seiten hin erstrecken.

Die genannte Keilwulst 13 kann eine Ringwulst bilden, die sich in einer Ebene senkrecht zur Längsachse des Schmelzeführungsstücks 10 erstrecken kann.

Der Spannring 14 besitzt vorteilhafterweise eine innenumfangsseitige Keilflächennut 16, die zwei seitliche Keilflanken umfasst, mit der die Keilflächennut 16 passgenau auf die Keilflächen 15 der Keilwulst 13 setzbar ist, vgl. Fig. 1.

Der genannte Spannring 14 kann dabei geschlitzt oder mehrstückig ausgebildet sein und/oder in anderer Weise zusammenziehbar bzw. von der Querschnittsöffnung her veränderbar ausgebildet sein. Wird der Spannring 14 zusammengezogen bzw. angezogen, verspannt sich die Keilflächennut 16 des Spannrings 14 mit der Keilwulst 13 der Adapterhälften 2 und 3, so dass die Adapterhälften 2 und 3 nicht nur radial zueinander gehalten werden, sondern auch axial, d.h. in Längsrichtung des Schmelzeführungsstücks 10 aufeinander zu gezogen werden und/oder gegeneinandergespannt werden. Diese axiale Verspannung der Adapterhälften 2 und 3 führt zu einem axialen Festspannen der Bauteile 5 und 6 gegen die Stirnseiten des Schmelzeführungsstücks 10.

Wie Fig. 1 zeigt, kann der Spannring 14 durch Befestigungsmittel 17 an einem der Bauteile 5 befestigt werden, beispielsweise um bei einem Öffnen des Spannrings 14 zu verhindern, dass der Spannring 14 herunterfällt.

Wie Fig. 1 zeigt, ist das Schmelzeführungsstück 10 in radialer Richtung bzw. quer zu seiner Längsachse zentriert. Hierzu ist einerseits eine Zentrierfläche an dem Bauteil 6 vorgesehen, so dass der diesem Bauteil 6 zugewandte Endabschnitt des Schmelzeführungsstücks 10 zentriert wird. Diese Zentrierfläche 18 kann beispielsweise eine Zentrierbohrung in der Stirnseite des Bauteils 6 sein, kann jedoch auch in Form eines anderen Zentriervorsprungs und/oder einer Zentrierausnehmung ausgebildet sein.

Zum anderen ist ein gegenüberliegender Endabschnitt des Schmelzeführungsstücks 10 an einer Zentrierfläche 19 zentriert, die an der dort vorgesehenen Adapterhälfte 2 vorgesehen sein kann. Beispielsweise kann eine Innenumfangsfläche der Adapterhälfte 2 diese Zentrierfläche 19 bilden, an der eine Außenumfangsfläche des Schmelzeführungsstücks 10 zentriert werden kann.

Wie Fig. 2 zeigt, können die Zentrierflächen 18 und 19 auch umgedreht werden, d.h. die in den Figuren linke Zentrierfläche 19 kann an dem Bauteil 5 vorgesehen sein, während das in den Figuren rechte Ende des Schmelzeführungsstücks 10 durch eine Zentrierfläche 18 an der Adapterhälfte 3 zentriert sein kann.

Wie Fig. 3 zeigt, können aber auch beide Zentrierflächen 18 und 19 direkt an den Bauteilen 5 und 6 vorgesehen sein. In diesem Fall kann vorgesehen sein, dass zwischen den Adapterhälften 2 und 3 einerseits und dem Schmelzeführungsstück 10 andererseits keine Berührung bzw. keine direkte Verbindung gegeben ist. Die beiden Adapterhälften 2 und 3 dienen lediglich der mechanischen Verbindung der beiden Bauteile 5 und 6 miteinander und dem axialen Festspannen der Bauteile 5 und 6 gegen das Schmelzeführungsstück 10.

Wie Fig. 4 zeigt, können aber auch beide Zentrierflächen 18 und 19 an den beiden Adapterhälften 2 und 3 vorgesehen sein. In diesem Fall brauchen an den beiden Bauteilen 5 und 6 selbst keine Zentrierflächen vorgesehen werden.

Wie Fig. 5 zeigt, kann an dem Schmelzeführungsstück 10 auch zumindest ein Schmelzefühler vorgesehen sein, mit Hilfe dessen beispielsweise eine Schmelzetemperatur und/oder ein Schmelzedruck und/oder ein Schmelzemassenvolumenstrom der durch durch das Schmelzeführungsstück 10 strömenden Schmelze bestimmt werden kann. Der Schmelzefühler 20 kann sich beispielsweise quer durch das Schmelzeführungsstück 10 hindurch erstrecken und einen mit der Innenumfangswandung näherungsweise bündigen, ggfs. aber auch darüber hinaus nach innen vorspringenden Fühlerkopf besitzen, der mit der Schmelze in Berührung kommen kann.

Das Schmelzeführungsstück 10 kann hierzu eine geeignete Ausnehmung zum Aufnehmen eines solchen Schmelzefühlers 20 besitzen.
Vorteilhafter Weise kann eine der Adapterhälften 3 eine Fühlerausnehmung 21 aufweisen, durch die hindurch der Schmelzefühler 20 und/oder ein damit verbundenes Signalkabel durchgeführt sein kann, vgl. Fig. 5. Die genannte Ausnehmung 21 kann beispielsweise in Form einer längsnut- oder schlitzartigen, sich beispielsweise radial erstreckenden Durchgangsausnehmung ausgebildet sein, die zu einer axialen Stirnseite der Adapterhälfte hin offen sein kann.

Wie Fig. 6 zeigt, ist der Verbindungsadapter dazu ausgebildet, einen Höhen- und/oder Querversatz zwischen den Schmelzekanälen der zu verbindenden Bauteile 5 und 6 auszugleichen. Hierzu besitzt das Schmelzeführungsstück 10 zueinander exzentrisch versetzte Mündungsquerschnitte. Wie die Ausführung nach Fig. 6 zeigt, kann das Schmelzeführungsstück 10 dabei einen näherungsweise geraden Verlauf besitzen, wobei die Enden des Schmelzeführungsstücks 10 jeweils spitzwinklig zur Längsachse des Schmelzeführungsstücks 10 abgelängt sein können, sodass sich die Mündungsquerschnitte des Schmelzeführungsstücks 10 in Ebenen erstrecken, die zur Längsachse des Schmelzeführungsstücks 10 spitz- bzw. stumpfwinklig geneigt sind. Die Mündungsquerschnitte sind dabei vorteilhafter Weise gegenläufig zur Längsachse geneigt und/oder in zueinander parallelen Ebenen angeordnet, vgl. Fig. 6.

Die Adapterhälften 2 und 3 sind entsprechend exzentrisch ausgebildet, vgl. Fig. 6.

Wie Fig. 7 zeigt, kann es jedoch auch ausreichend sein, wenn nur eine der Adapterhälften 3 exzentrisch ausgebildet ist, während die andere Adapterhälfte 2 ohne Querversatz - also beispielsweise entsprechend der Ausführung nach Fig. 5 - ausgebildet sein kann. Wie Fig. 7 ebenfalls zeigt, kann das Schmelzeführungsstück 10 zur Erzielung der notwendigen Exzentrizität auch geknickt bzw. leicht gekröpft ausgebildet sein und einen gebogenen und/oder geknickten Schmelzeverlaufkanal aufweisen.

## Patentansprüche

1. Verbindungsadapter zum Verbinden zweier schmelzeführender Bauteile (5, 6), mit zwei Adapterhälften (2, 3), die zum mechanischen Verbinden der beiden schmelzeführenden Bauteile (5,6) miteinander vorgesehen sind und jeweils Verbindungsmittel (11) zum Verbinden mit jeweils einem der Bauteile (5, 6) aufweisen, sowie Verbindungsmitteln (12) zum Verbinden der beiden Adapterhälften (2, 3) miteinander, und einem Schmelzeführungsstück (10), **dadurch gekennzeichnet, dass** das Schmelzezuführungsstück (10) zwei voneinander abweichende und/oder zueinander exzentrisch versetzte Mündungsquerschnitte besitzt und mit einem ersten Mündungsquerschnitt an ein erstes der schmelzeführenden Bauteile (5) und mit einem zweiten Mündungsquerschnitt an das zweite der beiden schmelzeführenden Bauteile (6) angepasst ist, wobei das Schmelzeführungsstück (10) separat von den Adapterhälften (2, 3) ausgebildet ist und durch die miteinander verbundenen Adapterhälften (2, 3) mit seinen gegenüberliegenden Stirnseiten gegen die schmelzeführenden Bauteile (5, 6) spannbar ist.

2. Verbindungsadapter nach dem vorhergehenden Anspruch, wobei die Adapterhälften (2, 3) gemeinsam eine Hülse bilden, die das Schmelzeführungsstück (10) umschließt.

3. Verbindungsadapter nach einem der vorhergehenden Ansprüche, wobei zumindest eine der Adapterhälften (2, 3) eine Zentrierfläche (18, 19) besitzt, an der das Schmelzeführungsstück (10) quer zu seiner Längsachse zentriert ist.

4. Verbindungsadapter nach einem der vorhergehenden Ansprüche, wobei zwischen dem Schmelzeführungsstück (10) und den Adapterhälften (2, 3) ein Luftspalt (22) und/oder eine thermische Isolierung vorgesehen ist und/oder das Schmelzeführungsstück (10) gegenüber den Adapterhälften (2, 3) thermisch isoliert ausgebildet ist.

5. Verbindungsadapter nach einem der vorhergehenden Ansprüche, wobei zwischen den Adapterhälften (2, 3) ein Luftspalt (23) und/oder eine thermische Isolierung vorgesehen ist und/oder die Adapterhälften (2, 3) thermisch isoliert ausgebildet sind.

6. Verbindungsadapter nach einem der vorhergehenden Ansprüche, wobei die Verbindungsmittel (12) zum Verbinden der Adapterhälften (2, 3) miteinander eine Spann- und/oder Klemmverbindung zwischen den Adapterhälften (2, 3) umfassen.

7. Verbindungsadapter nach dem vorhergehenden Anspruch, wobei die Verbindungsmittel (12) zum Verbinden der Adapterhälften (2, 3) miteinander eine umfangsseitige Keilwulst (13) an den Adapterhälften (2, 3) sowie einen auf die Keilwulst (13) spannbaren Spannring (14) umfassen, wobei die Keilwulst (13) zwei Keilwulsthälften besitzt, von denen eine an einer der Adapterhälften (2) und die andere an der anderen Adapterhälfte (3) vorgesehen ist, wobei die beiden Keilwulsthälften bei bestimmungsgemäßer Ausrichtung der Adapterhälften (2, 3) zueinander Rücken an Rücken mit voneinander abgewandten Keilflächen benachbart zueinander angeordnet sind, und wobei der Spannring (14) innenumfangsseitig eine Keilflächennut (16) aufweist, die auf die Keilwulst (13) der Adapterhälften (2, 3) setzbar und durch Zusammenziehen des Spannrings (14) mit der Keilwulst (13) verkeilbar ist.

8. Verbindungsadapter nach dem vorhergehenden Anspruch, wobei sich die Keilwulst (13) und/oder der Spannring (14) in einer Ebene erstreckt, die senkrecht zur Längsachse des Schmelzeführungsstücks (10) ausgerichtet ist, wobei die Keilwulst (13) und der Spannring (14) derart ausgebildet und aneinander angepasst sind, dass durch radiales Verspannen des Spannrings (14) gegen die Keilwulst (13) die Adapterhälften (2, 3) axial gegeneinander spannbar sind.

9. Verbindungsadapter nach einem der beiden vorhergehenden Ansprüche, wobei der Spannring (14) Befestigungsmittel (17) zum Befestigen an einem der schmelzeführenden Bauteile (5, 6) aufweist.

10. Verbindungsadapter nach einem der vorhergehenden Ansprüche, wobei das Schmelzeführungsstück (10) einerseits und die Adapterhälften (2, 3) andererseits aus verschiedenen Werkstoffen mit unterschiedlichen Wärmeausdehnungskoeffizienten bestehen, wobei das Schmelzeverbindungsstück (10) eine stärkere Wärmeausdehnung besitzt als die Adapterhälften (2, 3) derart, dass bei Erwärmung des Schmelzeführungsstücks (10) durch Schmelze sich das Schmelzeführungsstück (10) gegen die Schmelze führenden Bauteile (5, 6) verspannt.

11. Verbindungsadapter nach dem vorhergehenden Anspruch in Verbindung mit Anspruch 3, wobei das Schmelzeführungsstück (10) durch Wärmeausdehnung gegen die zumindest eine Zentrierfläche (18, 19) verspannbar ist.

12. Verbindungsadapter nach einem der vorhergehenden Ansprüche, wobei das Schmelzeführungssstück (10) aus mehreren Materialien mit unterschiedlichen Wärmeausdehnungskoeffizienten besteht.

13. Verbindungsadapter nach einem der vorhergehenden Ansprüche, wobei das Schmelzeführungsstück (10) einen mehrschichtigen Aufbau besitzt und/oder mit zumindest einer Beschichtung versehen ist, insbesondere eine thermisch isolierende und/oder haftreibungsreduzierende und/oder korrosionshemmende Beschichtung aufweist.

14. Verbindungsadapter nach einem der vorhergehenden Ansprüche, wobei die Mündungsquerschnitte des Schmelzeführungsstücks (10) voneinander in der Querschnittsfläche und/oder Querschnittskontur abweichen.

15. Verbindungsadapter nach dem vorhergehenden Anspruch, wobei das Schmelzeführungsstück (10) einen sich von der einen Seite zur anderen Seite des Schmelzeführungsstücks (10) verjüngenden oder erweiternden Schmelzekanal (1) besitzt und/oder einen sich in der Querschnittsform ändernden, insbesondere von rund auf eckig oder kreisrund auf ovalisiert, übergehenden Schmelzekanal (1) besitzt, und/oder wobei die zueinander versetzten Mündungsquerschnitte durch eine schräge Ablängung der Enden des Schmelzeführungsstücks (10) und/oder einen abgekröpften und/oder s-förmig gekrümmten Schmelzeführungsstück-Abschnitt gebildet sind.

16. Verbindungsadapter nach einem der vorhergehenden Ansprüche, wobei zumindest eine der Adapterhälften (3) zueinander exzentrisch versetzte Anschluss- und/oder Verbindungsabschnitte besitzt.

17. Verbindungsadapter nach einem der vorhergehenden Ansprüche, wobei das Schmelzeführungsstück (10) an seinen gegenüberliegenden Endabschnitten jeweils eine Zentrierfläche zum Zentrieren des Schmelzeführungsstücks (10) quer zur seiner Längsachse an jeweils einer Zentrierfläche (18, 19) an einem der schmelzeführenden Bauteile (5, 6) und/oder einer der Adapterhälften (2, 3) aufweist, wobei die Zentrierflächen des Schmelzeführungsstücks (10) vorzugsweise Außenumfangsflächen des Schmelzeführungsstücks (10) bilden.

18. Schmelzeverarbeitungsanlage umfassend zwei schmelzeführende Bauteile (5, 6), die durch einen Verbindungsadapter (7), der gemäß einem der vorhergehenden Ansprüche ausgebildet ist, miteinander verbunden sind.

19. Schmelzeverarbeitungsanlage nach dem vorhergehenden Anspruch, wobei zumindest eines der schmelzeführenden Bauteile (5, 6) eine Zentrierfläche (18, 19) zum Zentrieren des Schmelzeführungsstücks (10) des Verbindungsadapters (7) quer zur Längsachse des Schmelzeführungsstücks (10) aufweist, wobei die beiden Schmelze führenden Bauteile (5, 6) einen Höhen- und/oder Querversatz zueinander aufweisen und/oder die Schmelzekanäle in den miteinander zu verbindenden Schmelze führenden Bauteilen (5, 6) zueinander höhen- und/oder querversetzt angeordnet sind.

## Claims

1. A connection adapter for connecting two melt-guiding components (5, 6) having two adapter halves (2, 3) that are provided to mechanically connect the two melt-guiding components (5, 6) to one another and that each have connection means (11) for connecting to a respective one of the components (5, 6), as well as connection means (12) for connecting the two adapter halves (2, 3) to one another, and having a melt-guiding piece (10), **characterized in that** the melt-guiding piece (10) has two opening cross-sections differing from one another and/or offset eccentrically from one another and is adapted to a first one of the melt-guiding components (5) by a first opening cross-section and to a second one of the two melt-guiding components (6) by a second opening cross-section, wherein the melt-guiding piece (10) is formed separately from the adapter halves (2, 3) and is tensionable at its oppositely disposed end faces against the melt-guiding components (5, 6) by the mutually connected adapter halves (2, 3).

2. The connection adapter in accordance with the preceding claim, wherein the adapter halves (2, 3) together form a sleeve that surrounds the melt-guiding piece (10).

3. The connection adapter in accordance with one of the preceding claims, wherein at least one of the adapter halves (2, 3) has a centering surface (18, 19) at which the melt-guiding piece (10) is centered transversely to its longitudinal axis.

4. The connection adapter in accordance with one of the preceding claims, wherein an air gap (22) and/or a thermal insulation is/are provided between the melt-guiding piece (10) and the adapter halves (2, 3); and/or the melt-guiding piece (10) is thermally insulated with respect to the adapter halves (2, 3).

5. The connection adapter in accordance with one of the preceding claims, wherein an air gap (23) and/or a thermal insulation is/are provided between the adapter halves (2, 3); and/or the adapter halves (2, 3) are formed to be thermally insulated.

6. The connection adapter in accordance with one of the preceding claims, wherein the connection means (12) for connecting the adapter halves (2, 3) to one another comprise a tensioning and/or clamping connection between the adapter halves (2, 3).

7. The connection adapter in accordance with the preceding claim, wherein the connection means (12) for connecting the adapter halves (2, 3) to one another comprise a wedge bead (13) at the peripheral side at the adapter halves (2, 3) as well as a tensioning ring (14) tensionable onto the wedge bead (13), wherein the two wedge bead halves, in the intended orientation of the adapter halves (2, 3) are arranged adjacent one another back to back with wedge surfaces facing away from one another, and wherein the tensioning ring (14) comprises a wedge surface groove (16) which can be placed onto the wedge bead (13) of the adapter halves (2, 3) and can be wedged with the wedge bead (13) by compressing the tensioning ring (14).

8. The connection adapter in accordance with the preceding claim, wherein the wedge groove (13) and/or the tensioning ring (14) extends/extend in a plane that is aligned perpendicular to the longitudinal axis of the melt-guiding piece (10), wherein the wedge bead (13) and the tensioning ring (14) are configured and adapted to one another such that the adapter halves (2, 3) can be axially tensioned with respect to one another by a radial tensioning of the tensioning ring (14) against the wedge bead (13).

9. The connection adapter in accordance with one of the two preceding claims, wherein the tensioning ring (14) has fastening means (17) for fastening to one of the melt-guiding components (5, 6).

10. The connection adapter in accordance with one of the preceding claims, wherein the melt-guiding piece (10), on the one hand, and the adapter halves (2, 3), on the other hand, consist of different materials having different thermal coefficients of expansion, wherein the melt-guiding piece (10) has a greater thermal expansion than the adapter halves (2, 3) such that on a heating of the melt-guiding piece (10) by melt, the melt-guiding piece (10) is tensioned against the melt-guiding components (5, 6).

11. The connection adapter in accordance with the preceding claim in conjunction with claim 3, wherein the melt-guiding piece (10) is tensionable against the at least one centering surface (18, 19) by thermal expansion.

12. The connection adapter in accordance with one of the preceding claims, wherein the melt-guiding piece (10) consists of a plurality of materials having different thermal coefficients of expansion.

13. The connection adapter in accordance with one of the preceding claims, wherein the melt-guiding piece (10) has a multilayer design and/or is provided with at least one coating, in particular has a thermally insulating and/or stiction-reducing and/or corrosion-inhibiting coating.

14. The connection adapter in accordance with one of the preceding claims, wherein the opening cross-sections of the melt-guiding piece (10) differ from one another in the cross-sectional surface and/or cross-sectional contour.

15. The connection adapter in accordance with the preceding claim, wherein the melt-guiding piece (10) has a melt channel (1) tapering or flaring from the one side to the other side of the melt-guiding piece (10) and/or has a melt channel (1) changing in cross-sectional form, in particular merging from round to angled or from circular to oval, and/or wherein the mutually offset opening cross-sections are formed by an oblique cutting to length of the ends of the melt-guiding piece (10) and/or by a melt-guiding piece section cropped and/or curved in S shape.

16. The connection adapter in accordance with one of the preceding claims, wherein at least one of the adapter halves (3) has connector and/or connection sections offset eccentrically from one another.

17. The connection adapter in accordance with one of the preceding claims, wherein the melt-guiding piece (10) has at its oppositely disposed end sections a respective centering surface for centering the melt-guiding piece (10) transversely to its longitudinal axis at a respective one centering surface (18, 19) at one of the melt-guiding components (5, 6) and/or at one of the adapter halves (2, 3), with the centering surfaces of the melt-guiding pieces (10) preferably forming outer peripheral surfaces of the melt-guiding piece (10).

18. A melt-processing plant comprising two melt-guiding components (5, 6) that are connected to one another by a connection adapter (7) configured in accordance with one of the preceding claims.

19. The melt-processing plant in accordance with the preceding claim, wherein at least one of the melt-guiding components (5, 6) has a centering surface (18, 19) for centering the melt-guiding piece (10) of the connection adapter (7) transversely to the longitudinal axis of the melt-guiding piece (10), wherein the two melt-guiding components (5, 6) have a vertical and/or transverse offset from one another; and/or wherein the melt channels are arranged vertically and/or transversely offset from one another in the melt-guiding components (5, 6) to be connected to one another.

## Revendications

1. Adaptateur de raccordement destiné à relier deux composants (5, 6) acheminant de la matière fondue, comprenant deux moitiés d'adaptateur (2, 3), lesquelles sont ménagées pour la liaison mécanique entre eux des deux composants (5, 6) acheminant de la matière fondue et présentent respectivement des moyens de liaison (11) pour la liaison avec respectivement un des composants (5, 6), ainsi que des moyens de liaison (12) pour la liaison des deux moitiés d'adaptateur (2, 3) entre elles, et une pièce acheminant de la matière fondue (10), **caractérisé en ce que** la pièce acheminant de la matière fondue (10) possède deux sections d'embouchure différentes l'une de l'autre et/ou décalées de manière excentrique l'une par rapport à l'autre et **en ce qu'**avec une première section d'embouchure, elle est adaptée à un premier des composants (5) acheminant de la matière fondue et **en ce qu'**avec une deuxième section d'embouchure, elle est adaptée au deuxième des deux composants (6) acheminant de la matière fondue, la pièce acheminant de la matière fondue (10) étant réalisée de manière séparée des moitiés d'adaptateur (2, 3) et pouvant être serrée contre les composants (5, 6) acheminant de la matière fondue avec ses côtés frontaux opposés grâce aux moitiés d'adaptateur (2, 3) reliées entre elles.

2. Adaptateur de raccordement selon la revendication précédente, les moitiés d'adaptateur (2, 3) formant ensemble une douille qui entoure la pièce acheminant de la matière fondue (10).

3. Adaptateur de raccordement selon l'une quelconque des revendications précédentes, au moins une des moitiés d'adaptateur (2, 3) possédant une surface de centrage (18, 19) sur laquelle la pièce acheminant de la matière fondue (10) est centrée transversalement à son axe longitudinal.

4. Adaptateur de raccordement selon l'une quelconque des revendications précédentes, un espace d'air (22) et/ou une isolation thermique étant ménagés entre la pièce acheminant de la matière fondue (10) et les moitiés d'adaptateur (2, 3) et/ou la pièce acheminant de la matière fondue (10) étant réalisée de manière thermiquement isolée par rapport aux moitiés d'adaptateur (2, 3).

5. Adaptateur de raccordement selon l'une quelconque des revendications précédentes, un espace d'air (23) et/ou une isolation thermique étant ménagés entre les moitiés d'adaptateur (2, 3) et/ou les moitiés d'adaptateur (2, 3) étant réalisées de manière thermiquement isolées.

6. Adaptateur de raccordement selon l'une quelconque des revendications précédentes, les moyens de liaison (12) destinés à relier les moitiés d'adaptateur (2, 3) entre elles comprenant une liaison par tension et/ou par serrage entre les moitiés d'adaptateur (2, 3).

7. Adaptateur de raccordement selon la revendication précédente, les moyens de liaison (12) destinés à relier les moitiés d'adaptateur (2, 3) entre elles comprenant un bourrelet claveté (13) côté circonférentiel sur les moitiés d'adaptateur (2, 3) ainsi qu'une bague de serrage (14) pouvant être serrée sur le bourrelet claveté (13), le bourrelet claveté (13) possédant deux moitiés de bourrelet claveté, dont une est ménagée sur une des moitiés d'adaptateur (2) et l'autre est ménagée sur l'autre moitié d'adaptateur (3), les deux moitiés de bourrelet claveté, en cas d'orientation, conforme à l'emploi prévu, des moitiés d'adaptateur (2, 3) dos à dos l'une par rapport à l'autre étant disposées de manière avoisinante l'une à l'autre avec des surfaces clavetée détournées l'une de l'autre, et la bague de serrage (14) côté circonférentiel intérieur présentant une rainure à surface clavetée (16) qui peut être posée sur le bourrelet claveté (13) des moitiés d'adaptateur (2, 3) et peut être calée par resserrement de la bague de serrage (14) avec le bourrelet claveté (13).

8. Adaptateur de raccordement selon la revendication précédente, le bourrelet claveté (13) et/ou la bague de serrage (14) s'étendant dans un plan qui est orienté perpendiculairement à l'axe longitudinal de la pièce acheminant de la matière fondue (10), le bourrelet claveté (13) et la bague de serrage (14) étant réalisés et adaptés l'un par rapport à l'autre de manière à ce que par tension radiale de la bague de serrage (14) contre le bourrelet claveté (13), les moitiés d'adaptateur (2, 3) puissent être axialement serrées l'une contre l'autre.

9. Adaptateur de raccordement selon l'une quelconque des deux revendications précédentes, la bague de serrage (14) présentant des moyens de fixation (17) pour la fixation sur un des composants (5, 6) acheminant de la matière fondue.

10. Adaptateur de raccordement selon l'une quelconque des revendications précédentes, la pièce acheminant de la matière fondue (10), d'une part, et les moitiés d'adaptateur (2, 3), d'autre part, étant constituées de différents matériaux ayant différents coefficients de dilatation thermique, la pièce acheminant de la matière fondue (10) possédant une dilatation thermique plus forte que les moitiés d'adaptateur (2, 3) de manière à ce qu'en cas d'échauffement, par de la matière fondue, de la pièce acheminant de la matière fondue (10), la pièce acheminant de la matière fondue (10) se serre contre les composants (5, 6) acheminant de la matière fondue.

11. Adaptateur de raccordement selon la revendication précédente en liaison avec la revendication 3, la pièce acheminant de la matière fondue (10) pouvant être serrée contre l'au moins une surface de centrage (18, 19) par dilatation thermique.

12. Adaptateur de raccordement selon l'une quelconque des revendications précédentes, la pièce acheminant de la matière fondue (10) étant constituée de plusieurs matériaux ayant différents coefficients de dilatation thermique.

13. Adaptateur de raccordement selon l'une quelconque des revendications précédentes, la pièce acheminant de la matière fondue (10) possédant une structure à multicouche et/ou étant munie d'au moins un revêtement, notamment un revêtement thermiquement isolant et/ou réduisant l'adhérence et/ou empêchant la corrosion.

14. Adaptateur de raccordement selon l'une quelconque des revendications précédentes, les sections d'embouchure de la pièce acheminant de la matière fondue (10) différant les unes des autres dans la section transversale et/ou le contour transversal.

15. Adaptateur de raccordement selon la revendication précédente, la pièce acheminant de la matière fondue (10) possédant un canal de matière fondue (1) se rétrécissant ou s'élargissant d'un côté à l'autre de la pièce acheminant de la matière fondue (10) et/ou possédant un canal de matière fondue (1) se modifiant dans la forme de section, notamment passant de rond à angulaire ou de circulaire à ovale, et/ou les sections d'embouchure décalées les unes par rapport aux autres étant formées par un raccourcissement oblique des extrémités de la pièce acheminant de la matière fondue (10) et/ou par une section coudée et/ou courbée en forme de S.

16. Adaptateur de raccordement selon l'une quelconque des revendications précédentes, au moins une des moitiés d'adaptateur (3) possédant des sections de raccordement et/ou de liaison décalées excentriquement les unes par rapport aux autres.

17. Adaptateur de raccordement selon l'une quelconque des revendications précédentes, la pièce acheminant de la matière fondue (10) présentant sur ses sections terminales opposées respectivement une surface de centrage destinée à centrer la pièce acheminant de la matière fondue (10) transversalement à son axe longitudinal sur respectivement une surface de centrage (18, 19) sur un des composants (5, 6) acheminant de la matière fondue et/ou sur une des moitiés d'adaptateur (2, 3), les surfaces de centrage de la pièce acheminant de la matière fondue (10) formant de préférence des surfaces de circonférence extérieure de la pièce acheminant de la matière fondue (10).

18. Installation de traitement de matière fondue comprenant deux composants (5, 6) acheminant de la matière fondue, lesquels sont reliés entre eux au moyen d'un adaptateur de raccordement (7) réalisé selon l'une quelconque des revendications précédentes.

19. Installation de traitement de matière fondue selon la revendication précédente, au moins un des composants (5, 6) acheminant de la matière fondue présentant une surface de centrage (18, 19) pour le centrage de la pièce acheminant de la matière fondue (10) de l'adaptateur de raccordement (7) transversalement à l'axe longitudinal de la pièce acheminant de la matière fondue (10), les deux composants (5, 6) acheminant de la matière fondue présentant un décalage en hauteur et/ou un décalage transversal l'un par rapport à l'autre et/ou les canaux de matière fondue étant disposés dans les composants (5, 6) acheminant de la matière fondue, de manière décalée en hauteur et/ou transversalement les uns par rapport aux autres.
